# EUROPÄISCHE PATENTSCHRIFT

(11) **EP 0 575 865 B1**
(45) Veröffentlichungstag und Bekanntmachung des Hinweises auf die Patenterteilung: **03.01.1996**
(21) Anmeldenummer: 93109543.4
(22) Anmeldetag: 15.06.1993
(51) Int. Cl.: A47L 9/24, F16L 37/084

(54) **Anordnung zum lösbaren Verbinden von zwei miteinander koppelbaren Rohrstutzen**
Coupling device for releasably connecting coupleable pipe sockets
Dispositif de raccordement pour coupler de façon amovible des tuyaux emboîtables

(30) Priorität: 25.06.1992 DE 4220924
(43) Veröffentlichungstag der Anmeldung: 29.12.1993
(73) Patentinhaber: SIEMENS AKTIENGESELLSCHAFT, D-80333 München (DE)
(72) Erfinder: Sykora, Vladimir, D-8740 Bad Neustadt/Saale (DE)

(56) Entgegenhaltungen:
- EP-A- 0 212 313
- EP-A- 0 328 494
- EP-A- 0 378 119
- DE-A- 4 017 721
- FR-A- 2 576 771

## Beschreibung

Die Erfindung betrifft eine Anordnung zum lösbaren Verbinden von zwei miteinander koppelbaren Rohrstutzen gemäß dem Oberbegriff des Anspruchs 1.

Eine solche Anordnung ist durch die EP-A-0 212 313 bekannt. Bei dieser Anordnung muß das Verriegelungselement bei der Montage axial auf das rohrförmige Ende des Anschlußstutzens eines Saugschlauches aufgeschoben und an dem Rohransatz verrastet werden. Um eine einwandfreie Verrastung zu erreichen, muß das Verriegelungselement in einer bestimmten Ausrichtung in den Ringraum zwischen dem rohrförmigen Ende und dem Rohransatz eingeführt werden. Dies ist bei den engen Raumverhältnissen in dem Ringraum relativ schwierig.

Der Erfindung liegt die Aufgabe zugrunde, eine Anordnung der gattungsgemäßen Art dahingehend zu verbessern, daß das Verriegelungselement einfacher zu montieren ist.

Die Lösung der gestellten Aufgabe gelingt durch die im Kennzeichen des Patentanspruchs 1 angegebenen Merkmale. Bei einer derart gestalteten Anordnung kann das Verriegelungselement von außen in eine am Rohransatz vorgesehene Montageöffnung quer zur Längsachse des rohrförmigen Teils eingeschoben werden. Damit entfallen jegliche Hindernisse bei der Montage des Verriegelungselementes. Beim Einschieben des Verriegelungselementes gleitet die Federlasche an der Innenwand des Rohransatzes entlang, bis sie auf die Gegenstütze trifft. Durch die Abstimmung der Länge der Federlasche im Hinblick auf die Lage der Gegenstütze wird sichergestellt, daß die Federlasche in der montierten Stellung des Verriegelungselementes entsprechend durchgewölbt ist und so die notwendige Federspannung besteht, welche das Verriegelungselement in seiner montierten Stellung hält.

Aus Symmetriegründen werden zweckmäßigerweise zwei Federlaschen an dem Verriegelungelement vorgesehen. Auf diese Weise lassen sich Schiefstellungen des Verriegelungselementes vermeiden und es wird für das Rastglied ein gleichmäßiger Verstellweg erreicht. Fertigungstechnisch günstig ist es, die Federlaschen bei der Herstellung des Verriegelungselementes gleich an diesem anzuformen.

Eine sehr lange Federstrecke kann dadurch erzielt werden, daß die Gegenstütze gegenüber der Mitte der Entriegelungstaste in einem Umfangswinkel größer 180° an der Innenwand des Rohransatzes angeordnet ist. Hierbei ist von Vorteil, daß die beiden Federlaschen entsprechend ihrer Breite höhenmäßig gegeneinander versetzt an dem Verriegelungselement angeordnet sind. Die beiden Federlaschen können somit übereinandergreifen und sich mit ihrem freien Ende an der jeweiligen Gegenstütze anlegen.

Die Befestigung des Verriegelungselementes an dem Rohrstutzen erfolgt zweckmäßigerweise durch Verrastung. Diese Verrastung kann durch die Federkraft der Federlaschen aufrechterhalten werden, so daß keine gesonderten Halteelemente erforderlich sind. Zur Verrastung des Verriegelungselementes an dem Rohrstutzen kann an jeder Federlasche eine einen an der Innenwand des Rohransatzes ausgebildeten Hinterschnitt hintergreifender Rastarm vorgesehen werden.

Zum Verbinden der beiden Rohrstutzen ist an dem Verriegelungselement im Bereich der Entriegelungstaste als Rastglied eine radial vorstehende Rastnase vorgesehen, die in eine am anderen Rohrstutzen vorgesehene Rastnut eingreift. Eine drehbare Koppelung der beiden Rohrstutzen ergibt sich dadurch, daß die Rastnut umlaufend ausgebildet ist.

Die beiden Rohrstutzen können auch dadurch miteinander verbunden werden, daß mindestens eine Federlasche in eine am anderen Rohrstutzen vorgesehene, angepaßte Vertiefung eingreift, welche Vertiefung quer zur Längsachse des rohrförmigen Endes des einen Rohrstutzens verläuft.

Die Anordnung eignet sich insbesondere zum lösbaren Ankoppeln eines Saugschlauches an die Saugöffnung eines Staubsaugers. Hierzu wird der eine Rohrstutzen als Anschlußstutzen an einem Saugschlauch ausgebildet und die Saugöffnung des Staubsaugers bildet den anderen Rohrstutzen.

Anhand eines in der Zeichnung dargestellten Ausführungsbeispieles wird die Erfindung nachfolgend näher beschrieben. Es zeigt:
- FIG 1: eine Anordnung mit einem als Anschlußstutzen eines Saugschlauches ausgebildeten einen Rohrstutzen, der lösbar mit einem anderen, die Saugöffnung eines Staubsaugers bildenden Rohrstutzen verbunden ist,
- FIG 2: einen als Anschlußstutzen eines Saugschlauches ausgebildeten Rohrstutzen in Soitenansicht,
- FIG 3: einen Rohrstutzen im Schnitt entlang der Linie III-III in FIG 2,
- FIG 4: ein Verriegelungselement,
- FIG 5: einen Rohrstutzen mit eingesetztem Verriegelungselement im Querschnitt.

Mit 1 ist ein gestrichelt angedeuteter Saugschlauch bezeichnet, an dessen Ende als Anschlußstutzen ein Rohrstutzen 2 angefügt ist. Dieser Rohrstutzen 2 besitzt ein rohrförmiges Ende 3, das mit einer an einem Staubsaugergehäuse 4 vorgesehenen Saugöffnung 5 koppelbar ist. Das rohrförmige Ende 3 ist von einem radial beabstandeten Rohransatz 6 des Rohrstutzens 2 umgeben, so daß zwischen dem rohrförmigen Ende 3 und dem Rohransatz 6 ein Ringraum 7 gebildet ist. In der Umfangswand des Rohransatzes 6 ist eine Montageöffnung 8 vorgesehen, in die ein Verriegelungselement 9 einsetzbar ist. An dem Verriegelungselement 9 ist eine Entriegelungstaste 10 ausgebildet, an der wiederum ein radial vorstehendes Rastglied angeformt ist. Das Rastglied 11 greift in eine am Staubsaugergehäuse 4 vorgesehene, umlaufende Rastnut 12 ein, so daß der Rohrstutzen 2 drehbar mit der als anderer Rohrstutzen wirkenden Saugöffnung 5 des Staubsaugers verbunden ist.

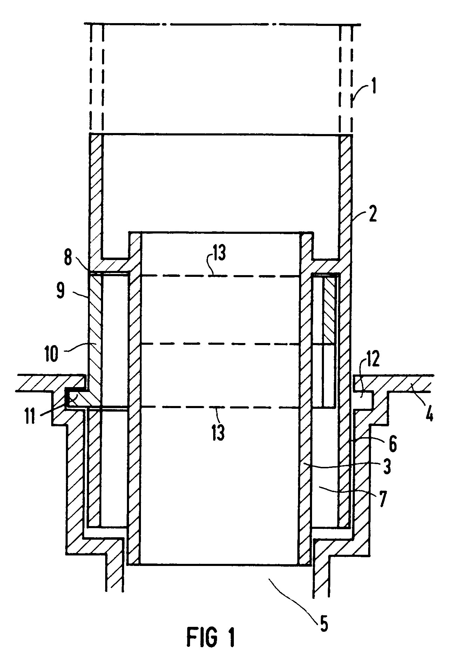

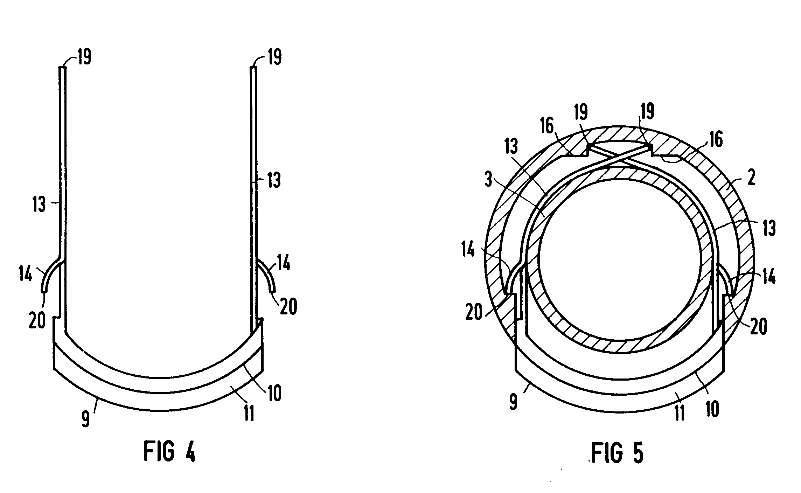

Wie die Darstellung nach FIG 4 erkennen läßt, besitzt das Verriegelungselement 9 auf der der Betätigungsseite der Entriegelungstaste 10 abgewandten Seite zwei angeformte, gerade Federlaschen 13. Wie in FIG 1 gestrichelt angedeutet, sind die beiden Federlaschen 13 entsprechend ihrer Breite höhenmäßig gegeneinander versetzt an der Entriegelungstaste 10 angeformt. An jeder Federlasche 13 ist jeweils ein nach außen abgespreizter Rastarm 14 angeordnet.

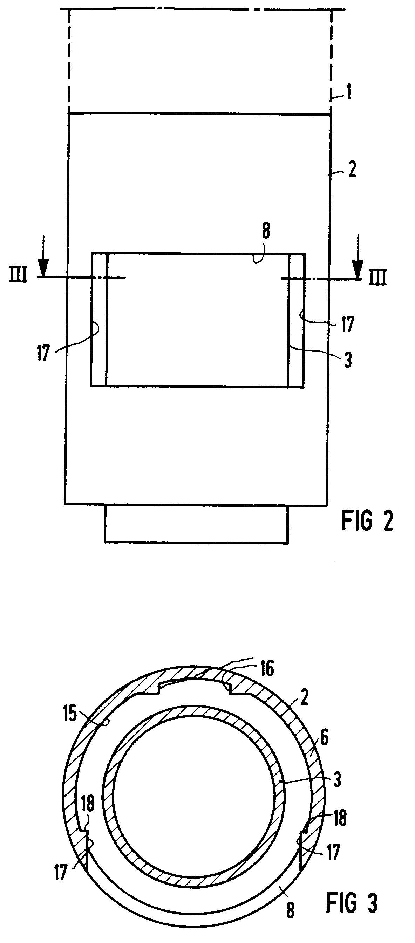

Aus dem in FIG 3 gezeigten Schnitt des Rohrstutzens 2 ist ersichtlich, daß auf der der Montageöffnung 8 gegenüberliegenden Seite an der Innenwand 15 des Rohransatzes 6 zwei Gegenstützen 16 angeordnet sind. Desgleichen ist zu erkennen, daß in Verlängerung der Seitenwände 17 der Montageöffnung 8 jeweils ein Hinterschnitt 18 an der Innenwand 15 ausgebildet ist.

Die FIG 5 zeigt den Rohrstutzen 2 im Zusammenhang mit dem an ihm montierten Verriegelungselement 9. Die Montage des Verriegelungselementes 9 geht dabei wie folgt vor sich. Das Verriegelungselement 9 wird mit seinen Federlaschen 13 in die Montageöffnung 8 eingeführt. Die Federlaschen 13 gleiten dabei tangential am Außenumfang des rohrförmigen Endes 3 vorbei. Beim weiteren Einführen des Verriegelungselementes 9 treffen die Federlaschen 13 jeweils mit ihrem freien Ende 19 auf die Innenwand 15 des Rohransatzes 6 und gleiten an der Innenwand 15 entlang, bis jede Federlasche 13 mit ihrem freien Ende 19 auf die entsprechende Gegenstütze 16 trifft. Da die Federlaschen 13 höhenmäßig gegeneinander versetzt sind, ist ein Überkreuzen im Bereich der Gegenstützen 16 möglich. Die Federlaschen 13 können somit entsprechend lang ausgebildet und es kann hierdurch eine gewünschte Federcharakteristik erreicht werden.

Nachdem die freien Enden 19 der Federlaschen 13 an den Gegenstützen 16 zur Anlage gekommen sind, wird das Verriegelungselement 9 noch etwas weiter in die Montageöffnung 8 gedrückt, so daß die an den Federlaschen 13 vorgesehenen Rastarme 14 mit ihrem freien Ende 20 hinter dem jeweiligen Hinterschnitt 18 der Innenwand 15 zur Anlage kommen.

Die Lage der Gegenstützen 16, die Länge der Federlaschen 13 und die Anordnung der Rastarme 14 an den Federlaschen 13 ist so getroffen, daß das Verriegelungselement 9 nach dem Auftreffen der freien Enden 19 der Federlaschen 13 auf die Gegenstützen 16 noch um eine kleine Strecke weiter in die Montageöffnung 8 eingeführt werden muß, bis die Rastarme 14 mit ihrem freien Ende 20 vollständig an den Seitenwänden 17 der Montageöffnung 8 entlang geglitten sind und sich danach mit ihrem freien Ende 20 hinter der jeweiligen Hinterschneidung 18 verhaken können. Durch dieses weitere Einführen des Verriegelungselementes 9 werden die Federlaschen 13 entsprechend vorgespannt und drücken die Rastarme 14 gegen die Hinterschneidungen 18. Das Verriegelungselement 9 kann somit ohne Rücksicht auf irgendwelche Fertigungstoleranzen spielfrei an dem Rohrstutzen 2 montiert werden.

Beim Ankoppeln des Rohrstutzens 2 an die Saugöffnung 5 des Staubsaugergehäuses 4 wird das Verriegelungselement 9 durch entsprechenden Druck auf die Entriegelungstaste 10 in den Ringraum 7 hineingedrückt. Die Federlaschen 13 werden dabei weiter gespannt. Ist der Rohrstutzen 2 in die Saugöffnung 5 eingeführt, wird die Entriegelungstaste 10 wieder losgelassen und durch die zuvor gespannten Federlaschen 13 wird das Verriegelungselement 9 wieder in seine durch die Rastarme 14 fixierte Ruhestellung zurückgedrängt. Dabei greift das Verriegelungselement 9 mit seinem Rastglied 11 in die Rastnut 12 ein, so daß der Rohrstutzen 2 mit der Saugöffnung 5 gekoppelt ist. Beim Abkoppeln des Rohrstutzens 2 vom Staubsaugergehäuse 4 wird durch Betätigen der Entriegelungstaste 10 das Rastglied 11 wieder aus der Rastnut 12 gelöst, so daß der Rohrstutzen 2 aus der Saugöffnung 5 herausgezogen werden kann.

Wie die Ausführungen zeigen, geschieht das Anbringen des Verriegelungselementes 9 an dem Rohrstutzen 2 durch Steckmontage, wobei diese von außen am Rohrstutzen 2 vorgenommen wird und somit in einfacher Weise ausführbar ist.

## Patentansprüche

1. Anordnung zum lösbaren Verbinden von zwei miteinander koppelbaren Rohrstutzen, bei der mindestens an einem Rohrstutzen (2) dessen koppelbares, rohrförmiges Ende (3) auf eine bestimmte axiale Länge von einem radial beabstandeten Rohransatz (6) umgeben ist, wobei in dem zwischen dem Rohransatz (6) und dem rohrförmigen Ende (3) gebildeten Ringraum (7) ein eine Entriegelungstaste (10) und ein durch Federkraft in einer am anderen Rohrstutzen (5) vorgesehenen Gegenrast (12) gehaltenes Rastglied (11) aufweisendes Verriegelungselement (9) angeordnet ist,
**dadurch gekennzeichnet,**
daß mit dem Verriegelungselement (9) mindestens eine quer zur Längsachse des rohrförmigen Endes (3) gerichtete Federlasche (13) verbunden ist, die mit ihrem freien Ende (19) an einer an der Innenwand (15) des Rohransatzes (6) vorgesehenen Gegenstütze (16) abgestützt ist, wobei die Lage dieser Gegenstütze am Umfang der Innenwand (15) in bezug auf die Länge der Federlasche (13) so gewählt ist, daß sich eine die Federspannung bewirkende Wölbung der Federlasche (13) ergibt.

2. Anordnung nach Anspruch 1,
**dadurch gekennzeichnet,**
daß an dem Verriegelungselement (9) zwei Federlaschen (13) vorgesehen sind.

3. Anordnung nach Anspruch 1 oder 2,
**dadurch gekennzeichnet,**
daß die Federlaschen (13) an dem Verriegelungselement (9) angeformt sind.

4. Anordnung nach Anspruch 1,2 oder 3,
**dadurch gekennzeichnet,**
daß die Gegenstütze (16) gegenüber der Mitte der Entriegelungstaste (10) des Verriegelungselementes (9) in einem Umfangswinkel größer 180° an der Innenwand (15) des Rohransatzes (6) angeordnet ist.

5. Anordnung nach Anspruch 2 oder 3 und 4,
**dadurch gekennzeichnet,**
daß die beiden Federlaschen (13) entsprechend ihrer Breite höhenmäßig gegeneinander versetzt an dem Verriegelungselement (9) angeordnet sind.

6. Anordnung nach einem oder mehreren der vorhergehenden Ansprüche, **dadurch gekennzeichnet,**
daß das Verriegelungselement (9) durch Verrastung an dem betreffenden Rohrstutzen (Saugöffnung 5) gehalten ist.

7. Anordnung nach Anspruch 6,
**dadurch gekennzeichnet,**
daß die Verrastung durch die Federkraft der Federlaschen (13) aufrechterhalten ist.

8. Anordnung nach Anspruch 6 und 7,
**dadurch gekennzeichnet,**
daß an jeder Federlasche (13) ein einen an der Innenwand (15) des Rohransatzes (6) ausgebildeten Hinterschnitt (18) hintergreifender Rastarm (14) vorgesehen ist.

9. Anordnung nach einem oder mehreren der vorhergehenden Ansprüche, **dadurch gekennzeichnet,**
daß an dem Verriegelungselement (9) im Bereich der Entriegelungstaste (10) als Rastglied eine radial vorsehende Rastnase (11) vorgesehen ist, die in eine am anderen Rohrstutzen (Saugöffnung (5) vorgesehene Rastnut (12) eingreift.

10. Anordnung nach Anspruch 9,
**dadurch gekennzeichnet,**
daß die Rastnut (12) umlaufend ausgebildet ist.

11. Anordnung nach einem oder mehreren der vorhergehenden Ansprüche, **dadurch gekennzeichnet,**
daß mindestens eine Federlasche (13) in eine am anderen Rohrstutzen vorgesehene, angepaßte Vertiefung eingreift, welche Vertiefung quer zur Längsachse des rohrförmigen Endes (3) des einen Rohrstutzens (12) verläuft.

12. Anordnung nach einem oder mehreren der vorhergehenden Ansprüche, **dadurch gekennzeichnet,**
daß der eine Rohrstutzen (2) als Anschlußstutzen an dem Saugschlauch (1) eines Staubsaugers ausgebildet ist und eine am Staubsaugergehäuse (4) eines Staubsaugers ausgebildete Saugöffnung (5) den anderen Rohrstutzen bildet.

## Claims

1. An arrangement for the releasable connection of two coupleable pipe sockets, in which the coupleable tubular end (3) of at least one pipe socket (2) is enclosed over a given axial length and at a radial distance by a pipe attachment (6), a locking element (9) being arranged in the annular chamber (7) formed between the pipe attachment (6) and the tubular end (3), which locking element (9) comprises a release button (10) and a locking member (11) held by spring force in a counter lock (12) provided on the second pipe socket (5), characterised in that at least one spring tongue (13) is connected to the locking element (9), which spring tongue extends transversely to the longitudinal axis of the tubular end (3) and is supported with its free end (19) against a counter support (16) provided on the inner wall (15) of the pipe attachment (6), the length of the counter support on the circumference of the inner wall (15) being selected in relation to the length of the spring tongue (13) in such a manner that this results in a curvature of the spring tongue (13) generating the spring tension.

2. An arrangement according to claim 1, characterised in that two spring tongues (13) are provided on the locking element (9).

3. An arrangement according to claim 1 or 2, characterised in that the spring tongues (13) are moulded onto the locking element (9).

4. An arrangement according to claim 1, 2 or 3, characterised in that the counter support (16) is arranged on the inner wall (15) of the pipe attachment (6) at a circumferential angle exceeding 180° relative to the centre of the release button (10) of the locking element (9).

5. An arrangement according to claim 2 or 3 and 4, characterised in that the two spring tongues (13) are arranged on the locking element (9) offset relative to one another by a height corresponding to their width.

6. An arrangement according to one or more of the preceding claims, characterised in that the locking element (9) is held on the respective pipe socket (suction opening 5) by catch-locking.

7. An arrangement according to claim 6, characterised in that the catch-locking is maintained by the spring force of the spring tongues (13).

8. An arrangement according to claim 6 and 7, characterised in that a locking arm (14) is provided on each spring tongue (13), which locking arm engages behind an undercut (18) formed on the inner wall (15) of the pipe attachment (6).

9. An arrangement according to one or more of the preceding claims, characterised in that a radially projecting locking nose (11), which engages in a locking groove (12) provided on the second pipe socket (suction opening (5)) is provided as a locking member on the locking element (9) in the region of the release button (10).

10. An arrangement according to claim 9, characterised in that the locking groove (12) extends circumferentially.

11. An arrangement according to one or more of the preceding claims, characterised in that at least one spring tongue (13) engages in a matching recess, which is provided on the second pipe socket and extends transversely to the longitudinal axis of the tubular end (3) of the first pipe socket (12)(sic).

12. An arrangement according to one or more of the preceding claims, characterised in that the first pipe socket (2) is constructed as a connecting socket on the suction hose (1) of a vacuum cleaner and a suction opening (5) constructed on the vacuum cleaner housing (4) of a vacuum cleaner forms the second pipe socket.

## Revendications

1. Dispositif de liaison amovible de deux embouts tubulaires pouvant être accouplés l'un à l'autre, dans lequel au moins sur un embout tubulaire (2), l'extrémité tubulaire pouvant être couplée (3) de cet embout tubulaire est entourée sur une certaine longueur axiale, d'un prolongement tubulaire (6) distant radialement, et dans lequel dans l'espace annulaire (7) créé entre le prolongement tubulaire (6) et l'extrémité tubulaire (3) est disposé un élément de verrouillage (9), ayant une touche de déverrouillage (10) et un organe d'encliquetage (11), qui est maintenu par la force d'un ressort dans un élément antagoniste (12) d'encliquetage prévu sur l'autre embout tubulaire (5), caractérisé par le fait qu'à l'élément de verrouillage (9) est reliée au moins une patte élastique (13), qui est dirigée transversalement à l'axe longitudinal de l'extrémité de forme tubulaire (3) et qui prend appui, par son extrémité libre (19), sur un appui antagoniste (16) prévu sur la paroi intérieure (15) du prolongement tubulaire (6), la position de cet appui antagoniste à la périphérie de la paroi intérieure (15) étant choisie, par rapport à la longueur de la patte élastique (13), de telle sorte qu'on obtient un cintrage, qui produit la tension élastique, de la patte élastique (13).

2. Dispositif suivant la revendication 1, caractérisé par le fait que deux pattes élastiques (13) sont prévues sur l'élément de verrouillage (9).

3. Dispositif suivant la revendication 1 ou 2, caractérisé par le fait que les pattes élastiques (13) sont formées sur l'élément de verrouillage (9).

4. Dispositif suivant la revendication 1, 2 ou 3, caractérisé par le fait que l'appui antagoniste (16) est disposé, par rapport au centre de la touche de déverrouillage (10) de l'élément de verrouillage (9), dans une plage angulaire supérieure à 180° sur la paroi intérieure (15) du prolongement tubulaire (6).

5. Dispositif suivant la revendication 2 ou 3, et 4, caractérisé par le fait que les deux pattes élastiques (13) sont disposées, en fonction de leur largeur, dans des positions décalées en hauteur sur l'élément de verrouillage (9).

6. Dispositif suivant une ou plusieurs des revendications précédentes, caractérisé par le fait que l'élément de verrouillage (9) est retenu par encliquetage sur l'embout tubulaire considéré (ouverture d'aspiration 5).

7. Dispositif suivant la revendication 6, caractérisé par le fait que l'encliquetage est maintenu par la force élastique des pattes élastiques (13).

8. Dispositif suivant les revendications 6 et 7, caractérisé par le fait que sur chaque patte élastique (13) est prévu un bras d'encliquetage (14), qui s'engage derrière une partie en contre-dépouille (18) formée sur la paroi intérieure (15) du prolongement tubulaire (6).

9. Dispositif suivant une ou plusieurs des revendications précédentes, caractérisé par le fait que sur l'élément de verrouillage (9) est prévu, en tant qu'organe d'encliquetage, dans la zone de la touche de déverrouillage (10), un bec d'encliquetage (11), qui fait saillie radialement et qui s'engage dans une gorge d'encliquetage (12) prévue sur l'autre embout tubulaire (ouverture d'aspiration 5).

10. Dispositif suivant la revendication 9, caractérisé par le fait que la gorge d'encliquetage (12) est une gorge circonférentielle.

11. Dispositif suivant une ou plusieurs des revendications précédentes, caractérisé par le fait qu'au moins une patte élastique (13) s'engage dans un renfoncement adapté, qui est prévu dans l'autre embout tubulaire, lequel renfoncement s'étend transversalement à l'axe longitudinal de l'extrémité tubulaire (13) du premier embout tubulaire (2).

12. Dispositif suivant une ou plusieurs des revendications précédentes, caractérisé par le fait qu'un embout tubulaire (2) est agencé sous la forme d'un embout de raccordement présent sur le tuyau d'aspiration (1) d'un aspirateur et qu'une ouverture d'aspiration (5) formée dans le boîtier (4) d'un aspirateur forme l'autre embout tubulaire.
